# EUROPEAN PATENT SPECIFICATION

(11) **EP 3 816 240 B1**
(45) Date of publication and mention of the grant of the patent: **29.12.2021**
(21) Application number: 20189877.2
(22) Date of filing: 06.08.2020
(51) Int. Cl.: C09D 5/16, C09D 133/10, C09D 143/04, C08F 230/08, C08F 220/14, C08K 3/22

(54) **BETAINE IONIC LIQUID-MODIFIED COATING, AND PREPARATION METHOD AND USE THEREOF**
MIT IONISCHER BETAINFLÜSSIGKEIT MODIFIZIERTE BESCHICHTUNG UND HERSTELLUNGSVERFAHREN UND VERWENDUNG DAVON
REVÊTEMENT DE BÉTAÏNE MODIFIÉ PAR DES LIQUIDES IONIQUES, SON PROCÉDÉ DE PRÉPARATION ET D'UTILISATION

(30) Priority: 29.10.2019 CN 201911035369
(43) Date of publication of application: 05.05.2021
(73) Proprietor: Lanzhou Institute of Chemical Physics, Chinese Academy of Sciences, Lanzhou 730000 (CN)
(72) Inventor: ZHOU, Feng, Lanzhou, 730000 (CN); PEI, Xiaowei, Lanzhou, 730000 (CN); YANG, Wufang, Lanzhou, 730000 (CN); ZHANG, Jianbin, Lanzhou, 730000 (CN)
(74) Representative: Schrell, Andreas

(56) References cited:
- EP-A1- 2 468 825
- WO-A2-2012/150360
- CN-A- 105 542 607
- CN-B- 107 163 748

## Description

### TECHNICAL FIELD

The present invention relates to the technical field of marine antifouling coatings, and in particular to a betaine ionic liquid-modified coating, and a preparation method and use thereof.

### BACKGROUND

Marine biofouling is quite harmful to ships, marine engineering facilities, and marine aquaculture. Specifically, marine biofouling can cause increased resistance to the ship sailing, accelerate the corrosion of marine engineering facilities, and pollute the marine ecological environment. Among many techniques for preventing and controlling the marine biofouling, antifouling coatings are the most economical and efficient means. However, at present, most of the commonly-used antifouling coatings are solvent-based, with a content of volatile organic compounds (VOCs) higher than 400 g/L, and organic solvents will be added as thinners during the coating process, resulting in the release of a lot of organic solvents, which causes pollutions to the environment and jeopardizes the health of operators. Therefore, it is prone to develop marine antifouling coatings that are environmentally friendly and water-based.

Currently, there is no use of mature marine antifouling coatings that are environmentally friendly and water-based on the market. Some reported technologies for water-based antifouling coatings generally have bottleneck problems, such as high VOC content, short antifouling period (less than 6 months), and poor water-resistance.

### Prior Art:

CN107163748 B, marine bio-fouling-resistant coating comprises polymerized ionic liquid modified acrylic resin, colophony, compound antifouling agent, pigment, auxiliary agent and organic solvent.

EP2468825, water based anti-fouling coating composition.

### SUMMARY

The present invention is intended to provide a betaine ionic liquid-modified coating, and a preparation method and use thereof. The betaine ionic liquid-modified coating provided by the present invention has an ultra-low content of VOCs (less than 20 g/L), and is environmentally friendly. The betaine ionic liquid-modified coating can form into a coating film with prominent mechanical properties, stable self-polishing rate, and excellent water immersion-resistance and antifouling performance.

To achieve the above purpose, the present invention provides the following technical solutions.

The present invention provides a betaine ionic liquid-modified coating, including the following components, in mass percentage:
20% to 30% of betaine ionic liquid-modified emulsion, 5% to 15% of rosin emulsion, 20% to 30% of antifoulant, 3% to 10% of pigment/filler, 1% to 2% of water-based additive, 0.5% to 1% of film-forming additive, and the balance of water;
where the betaine ionic liquid-modified emulsion is prepared by the following raw materials, in mass percentage:
   2% to 3% of betaine ionic liquid monomer, 15% to 20% of silyl acrylate monomer, 30% to 40% of acrylic ester monomer, 0.5% to 1.5% of acrylic acid, 1% to 2% of emulsifier, 0.3% to 0.6% of initiator, 0.05% to 0.1% of sodium bicarbonate, 0.3% to 0.5% of pH adjuster, and the balance of water.

Preferably, the betaine ionic liquid monomer includes 3-[*N*,*N*-dimethyl-[2-(2-methylprop-2-enoyloxy)ethyl]amino]propane-1-sulfonic acid zwitterion;
the silyl acrylate monomer includes triisopropylsilyl methacrylate and/or triisopropylsilyl acrylate; and
the acrylic ester monomer includes one or more of methyl methacrylate (MMA), butyl methacrylate (BMA), butyl acrylate, hydroxyethyl methacrylate (HEMA) and isobornyl methacrylate (IBMA).

Preferably, the emulsifier is at least one of an anionic emulsifier, a cationic emulsifier and a nonionic emulsifier;
the initiator is a persulfate initiator; and
the pH adjuster is ammonia water with a mass concentration of 25% to 28%.

Preferably, the betaine ionic liquid-modified emulsion is prepared by the following steps:
mixing the betaine ionic liquid monomer, the silyl acrylate monomer, the acrylic ester monomer, the acrylic acid, the emulsifier and a first part of water, and then subjecting the resulting mixture to emulsification to obtain a monomer emulsion;
dissolving the initiator in a second part of water to obtain an initiator aqueous solution;
mixing the sodium bicarbonate, the remaining water, a part of the monomer emulsion and a part of the initiator aqueous solution by stirring, then heating the resulting mixture to 80°C to 81°C, and further stirring the mixture at this temperature for 50 min to 100 min to obtain a seed emulsion; and
adding the remaining monomer emulsion and the remaining initiator aqueous solution dropwise to the seed emulsion, heating the resulting mixture to 87°C to 89°C and holding the temperature 50 min to 70 min, then cooling the mixture to 50°C to 55°C, and adding the pH adjuster to the resulting system to obtain the betaine ionic liquid-modified emulsion.

Preferably, the first part of water accounts for 10% to 15% of the total amount of water; the initiator aqueous solution has a mass concentration of 5% to 10%;
the part of the monomer emulsion accounts for 25% to 35% of the total amount of the monomer emulsion; and
the part of the initiator aqueous solution accounts for 12% to 18% of the total amount of the initiator aqueous solution.

Preferably, the rosin emulsion is prepared by the following raw materials, in parts by mass:
35 to 45 parts of rosin, 8 to 10 parts of rosin-specific emulsifier, and 45 to 55 parts of water.

Preferably, the rosin emulsion is prepared by the following steps:
melting the rosin, and then mixing the melted rosin with the rosin-specific emulsifier to obtain a water-in-oil system; and
adding hot water of 88°C to 92°C dropwise to the water-in-oil system of 98°C to 102°C to obtain the rosin emulsion.

Preferably, the antifoulant includes a main antifoulant and an auxiliary antifoulant, where the main antifoulant is cuprous oxide and/or copper powder, and the auxiliary antifoulant is one or more of copper pyrithione, zinc pyrithione, 4,5-dichloro-2-n-octyl-4-isothiazolin-3-one, diuron and zineb;
the pigment/filler includes one or more of organic bentonite, iron oxide red, zinc oxide, calcium carbonate, barium sulfate, mica powder, quartz powder and talc powder;
the water-based additive includes a water-based wetting/dispersing agent, a water-based thickening agent, a water-based leveling agent and a water-based defoamer, where the water-based wetting/dispersing agent is at least one of AC8892, BYK156 and BYK152, the water-based thickening agent is a mixture of DeuRheo WT-105A and hydroxyethyl cellulose, the water-based leveling agent is at least one of WCT2490, BYK375 and DC57, and the water-based defoamer is at least one of DA PRO AP7010, BYK025 and DC65; and
the film-forming additive includes ethylene glycol ethyl ether and/or ethylene glycol butyl ether.

The present invention further provides a method for preparing the above betaine ionic liquid-modified coating, including the following steps:
mixing water, a water-based additive, an antifoulant and a pigment/filler, then grinding the resulting mixture to obtain a liquid of ground materials; and
mixing the liquid of ground materials with a betaine ionic liquid-modified emulsion, a rosin emulsion and a film-forming additive to obtain the betaine ionic liquid-modified coating.

The present invention further provides use of the above betaine ionic liquid-modified coating or a betaine ionic liquid-modified coating prepared by the above preparation method as a marine antifouling coating.

The present invention provides a betaine ionic liquid-modified coating, including the following components, in mass percentage: 20% to 30% of betaine ionic liquid-modified emulsion, 5% to 15% of rosin emulsion, 20% to 30% of antifoulant, 3% to 10% of pigment/filler, 1% to 2% of water-based additive, 0.5% to 1% of film-forming additive, and the balance of water. The betaine ionic liquid-modified emulsion is prepared by the following raw materials, in mass percentage based on the raw materials for preparing the betaine ionic liquid-modified emulsion as 100%: 2% to 3% of betaine ionic liquid monomer, 15% to 20% of silyl acrylate monomer, 30% to 40% of acrylic ester monomer, 0.5% to 1.5% of acrylic acid, 1% to 2% of emulsifier, 0.3% to 0.6% of initiator, 0.05% to 0.1% of sodium bicarbonate, 0.3% to 0.5% of pH adjuster, and the balance of water. In the present invention, a betaine ionic liquid-modified emulsion is prepared with a betaine ionic liquid monomer and a silyl acrylate monomer, and the betaine ionic liquid-modified emulsion is used as a film-forming substance to provide a betaine ionic liquid-modified coating with excellent antifouling activity and self-polishing performance, which significantly improves the antifouling period of the coating. Moreover, after the betaine ionic liquid-modified coating forms a coating film, the silyl acrylate monomer on the surface will be hydrolyzed in water and then peeled off under the shear action of water, thereby resulting in the surface self-polishing and an excellent self-renewing ability. In addition, in the betaine ionic liquid-modified coating provided by the present invention, rosin, which will exist in the form of emulsion droplets and micelles under the synergistic effect of all components, can evenly distribute in the coating film during the film-forming process of a betaine ionic liquid-modified coating, and can be slowly dissolved in alkaline seawater to form microchannels, which is conducive to the stable release of antifoulants and improves the antifouling performance. In addition, the betaine ionic liquid-modified coating provided by the present invention has an ultra-low VOC content (less than 20 g/L), and does not include poisons such as tributyltin (TBT), demonstrating environmental friendliness, prominent film-forming properties and excellent water immersion-resistance.

The results of examples show that the coating film formed from the betaine ionic liquid-modified coating provided in the present invention has adhesion force reaching level 1, flexibility reaching 1 mm, and impact resistance greater than 50 kg•cm; after being immersed in artificial seawater for 30 days, the coating film does not blister or fall off, and still has a stable self-polishing rate, with an average polishing rate of 0.29 µm/d to 0.40 µm/d; and after being statically exposed to real seawater in the South China Sea for 9 months, the coating film still has a clean surface with a fouling area less than 5%, and exhibits excellent anti-biofouling characteristics.

Furthermore, the betaine ionic liquid-modified coating provided in the present invention requires a simple preparation process, and is suitable for the industrial largescale production and application.

### DETAILED DESCRIPTION

The present invention provides a betaine ionic liquid-modified coating, including the following components, in mass percentage:
20% to 30% of betaine ionic liquid-modified emulsion, 5% to 15% of rosin emulsion, 20% to 30% of antifoulant, 3% to 10% of pigment/filler, 1% to 2% of water-based additive, 0.5% to 1% of film-forming additive, and the balance of water.

The betaine ionic liquid-modified emulsion is prepared by the following raw materials, in mass percentage:
2% to 3% of betaine ionic liquid monomer, 15% to 20% of silyl acrylate monomer, 30% to 40% of acrylic ester monomer, 0.5% to 1.5% of acrylic acid, 1% to 2% of emulsifier, 0.3% to 0.6% of initiator, 0.05% to 0.1% of sodium bicarbonate, 0.3% to 0.5% of pH adjuster, and the balance of water.

In the betaine ionic liquid-modified coating provided by the present invention, a betaine ionic liquid-modified emulsion is an important component. The betaine ionic liquid-modified emulsion is described as follows.

In the present invention, the betaine ionic liquid-modified emulsion is prepared by the following raw materials, in mass percentage based on the raw materials for preparing the betaine ionic liquid-modified emulsion as 100%:
2% to 3% of betaine ionic liquid monomer, 15% to 20% of silyl acrylate monomer, 30% to 40% of acrylic ester monomer, 0.5% to 1.5% of acrylic acid, 1% to 2% of emulsifier, 0.3% to 0.6% of initiator, 0.05% to 0.1% of sodium bicarbonate, 0.3% to 0.5% of pH adjuster, and the balance of water.

In the present invention, the raw material for preparing the betaine ionic liquid-modified emulsion includes 2% to 3% and preferably 2.3% to 2.7% of betaine ionic liquid monomer; and the betaine ionic liquid monomer preferably includes 3-[*N*,*N*-dimethyl-[2-(2-methylprop-2-enoyloxy)ethyl]amino]propane-1-sulfonic acid zwitterion, which acts as both an efficient antifouling active component and a reactive emulsifier, thereby effectively improving the antifouling performance and dispersion stability of a coating.

In the present invention, the raw material for preparing the betaine ionic liquid-modified emulsion includes 15% to 20% and preferably 16% to 19% of silyl acrylate monomer; and the silyl acrylate monomer preferably includes triisopropylsilyl methacrylate and/or triisopropylsilyl acrylate, and more preferably includes triisopropylsilyl methacrylate or triisopropylsilyl acrylate. In the present invention, the betaine ionic liquid-modified emulsion is used as a film-forming substance for the betaine ionic liquid-modified coating. After the betaine ionic liquid-modified coating forms a coating film, the silyl acrylate monomer on the surface will be hydrolyzed in water and then peeled off under the shear action of water, thereby resulting in the surface self-polishing and an excellent self-renewing ability.

In the present invention, the raw material for preparing the betaine ionic liquid-modified emulsion includes 30% to 40% and preferably 33% to 37% of acrylic ester monomer; the acrylic ester monomer preferably includes methyl methacrylate (MMA), butyl methacrylate (BMA), butyl acrylate, hydroxyethyl methacrylate (HEMA), and isobornyl methacrylate (IBMA), and more preferably is a mixture of butyl acrylate, MMA and IBMA; and the butyl acrylate, MMA and IBMA in the mixture have a mass ratio preferably of (15-20):(53-56):(15-18), and more preferably of (16-18):(54-55):(16-17). In the present invention, the acrylic ester monomer is to adjust the glass transition temperature of the betaine ionic liquid-modified emulsion, which is favorable for improving the physical and chemical properties of the coating film.

In the present invention, the raw material for preparing the betaine ionic liquid-modified emulsion includes 0.5% to 1.5% and preferably 0.7% to 1.3% of acrylic acid. In the present invention, the acrylic acid can improve the hydrophilicity of emulsion particles in the betaine ionic liquid-modified emulsion, which is favorable for increasing the dispersion stability of the betaine ionic liquid-modified emulsion, and thus for ensuring that the betaine ionic liquid-modified coating has prominent stability.

In the present invention, the raw material for preparing the betaine ionic liquid-modified emulsion includes 1% to 2% and preferably 1.2% to 1.8% of emulsifier; the emulsifier is preferably at least one of an anionic emulsifier, a cationic emulsifier and a nonionic emulsifier, and more preferably a mixture of a nonionic emulsifier and an anionic emulsifier; and the nonionic emulsifier and anionic emulsifier in the mixture have a mass ratio preferably of (1.5-2.5):1, and more preferably of 2:1. In the present invention, the anionic emulsifier preferably includes sodium dodecyl sulfonate (SDS) and/or sodium dodecyl benzene sulfonate (SDBS); the cationic emulsifier preferably includes dodecylammonium chloride (DAC) and/or cetyltrimethylammonium bromide (CTAB); and the nonionic emulsifier preferably includes at least one of emulsifier OP-10, emulsifier OP-15 and emulsifier T-20. In the present invention, the emulsifier can reduce the surface tension of water and emulsify the monomer, which improves the storage stability of the betaine ionic liquid-modified coating.

In the present invention, the raw material for preparing the betaine ionic liquid-modified emulsion includes 0.3% to 0.6% and preferably 0.4% to 0.5% of initiator; and the initiator is preferably a persulfate initiator, and more preferably ammonium persulfate or potassium persulfate.

In the present invention, the raw material for preparing the betaine ionic liquid-modified emulsion includes 0.05% to 0.1% and preferably 0.06% to 0.09% of sodium bicarbonate. In the present invention, the sodium bicarbonate can adjust and stabilize the pH of the betaine ionic liquid-modified emulsion, which is favorable for maintaining the stability of the betaine ionic liquid-modified emulsion, and thus for ensuring that the betaine ionic liquid-modified coating has prominent stability.

In the present invention, the raw material for preparing the betaine ionic liquid-modified emulsion includes 0.3% to 0.5% of pH adjuster, and the pH adjuster is preferably ammonia water with a mass concentration of 25% to 28%. In the present invention, the pH adjuster, in combination with the sodium bicarbonate, is used to adjust the pH of the betaine ionic liquid-modified emulsion, which is favorable for ensuring the excellent stability of the betaine ionic liquid-modified emulsion, and thus for improving the stability of the betaine ionic liquid-modified coating.

In the present invention, the raw material for preparing the betaine ionic liquid-modified emulsion includes the balance of water, and the water is preferably deionized water.

In the present invention, the betaine ionic liquid-modified emulsion has a pH value preferably of 6 to 8; the emulsion particles in the betaine ionic liquid-modified emulsion have an average particle diameter preferably of 150 nm to 200 nm; and the betaine ionic liquid-modified emulsion has a solid content preferably of 45 wt% to 50 wt% (GB 1725-2007).

In the present invention, a method for preparing the betaine ionic liquid-modified emulsion preferably includes the following steps:
a betaine ionic liquid monomer, a silyl acrylate monomer, an acrylic ester monomer, acrylic acid, an emulsifier and a first part of water are mixed and then subjected to emulsification to obtain a monomer emulsion;
an initiator is dissolved in a second part of water to obtain an initiator aqueous solution;
sodium bicarbonate, the remaining water, a part of the monomer emulsion and a part of the initiator aqueous solution are mixed and stirred, then heated to 80°C to 81°C, and further stirred at this temperature for 50 min to 100 min to obtain a seed emulsion; and
the remaining monomer emulsion and the remaining initiator aqueous solution are added dropwise to the seed emulsion, and the resulting system is heated to 87°C to 89°C and kept at this temperature for 50 min to 70 min, then cooled to 50°C to 55°C, and added with a pH adjuster to obtain a betaine ionic liquid-modified emulsion.

In the present invention, a betaine ionic liquid monomer, a silyl acrylate monomer, an acrylic ester monomer, acrylic acid, an emulsifier and a first part of water are mixed and then subjected to emulsification to obtain a monomer emulsion; and the raw materials for the preparation are successfully mixed preferably by mixing the betaine ionic liquid monomer, silyl acrylate monomer, acrylic ester monomer and acrylic acid thoroughly and then adding the emulsifier and the first part of water. In the present invention, the first part of water preferably accounts for 10% to 15% of the total amount of water.

In the present invention, the emulsification is conducted preferably under stirring at room temperature, namely, requiring no additional heating or cooling. In an embodiment of the present invention, the room temperature specifically refers to 25°C; the stirring is conducted preferably at 550 r/min to 650 r/min; and the emulsification is conducted preferably for 25 min to 35 min.

In the present invention, an initiator is dissolved in a second part of water to obtain an initiator aqueous solution; the initiator aqueous solution has a mass concentration preferably of 5% to 10%, and more preferably of 5% to 8%; and the second part of water is used preferably at an amount that allows the initiator aqueous solution to have a mass concentration meeting the above requirements.

In the present invention, after the monomer emulsion and the initiator aqueous solution are obtained, sodium bicarbonate, the remaining water, a part of the monomer emulsion and a part of the initiator aqueous solution are mixed and stirred, then heated to 80°C to 81°C, and further stirred at this temperature for 50 min to 100 min to obtain a seed emulsion. In the present invention, the part of the monomer emulsion preferably accounts for 25% to 35% of the total amount of the monomer emulsion, and the part of the initiator aqueous solution preferably accounts for 12% to 18% of the total amount of the initiator aqueous solution. In the present invention, the mixing and stirring is conducted preferably at room temperature, and preferably for 25 min to 35 min, with a rotational speed preferably of 550 r/min to 650 r/min.

In the present invention, after the mixing and stirring, the temperature is raised from room temperature to 80°C to 81°C at a rate preferably of 5 °C/min, and the slow increase in temperature is beneficial to maintaining the stability of the emulsion. In the present invention, after the temperature is raised to 80°C to 81°C, preferably, the system is further stirred for 30 min to 60 min until weak blue light appears in the system, and then the resulting system is further stirred for 20 min to 40 min to obtain a stable seed emulsion with weak blue light.

In the present invention, after the seed emulsion is obtained, the remaining monomer emulsion and the remaining initiator aqueous solution are added dropwise to the seed emulsion, and the resulting system is heated to 87°C to 89°C and kept at this temperature for 50 min to 70 min, then cooled to 50°C to 55°C, and added with a pH adjuster to obtain a betaine ionic liquid-modified emulsion. In the present invention, the remaining monomer emulsion is preferably added dropwise within 1 h, and during this period, the remaining initiator aqueous solution is added in batches, and the viscosity of the seed emulsion is increased significantly; and then the pH adjuster is added finally to form a betaine ionic liquid-modified emulsion with stably-dispersed micelles and high bondability.

In the present invention, after the pH adjuster is added, the resulting system is preferably filtered to remove the small amount of gel in the system to obtain a betaine ionic liquid-modified emulsion. The present invention has no special limitation on the filtration, and a manner well known by those skilled in the art may be adopted.

In the present invention, a betaine ionic liquid-modified emulsion is prepared with a betaine ionic liquid monomer and a silyl acrylate monomer, and the betaine ionic liquid-modified emulsion is used as a film-forming substance to provide a betaine ionic liquid-modified coating with excellent antifouling activity and self-polishing performance, which significantly improves the antifouling period of the coating. Moreover, after the betaine ionic liquid-modified coating forms a coating film, the silyl acrylate monomer on the surface will be hydrolyzed in water and then peeled off under the shear action of water, thereby resulting in the surface self-polishing and an excellent self-renewing ability.

In the present invention, the rosin emulsion is an important component for the betaine ionic liquid-modified coating, and the rosin emulsion is described as follows.

In the present invention, the raw materials for preparing the rosin emulsion include, in parts by mass: preferably, 35 to 45 parts of rosin, 8 to 10 parts of rosin-specific emulsifier, and 45 to 55 parts of water; more preferably, 37 to 42 parts of rosin, 8 to 10 parts of rosin-specific emulsifier, and 47 to 52 parts of water; and further more preferably, 40 parts of rosin, 9 parts of rosin-specific emulsifier, and 50 parts of water. In the present invention, the rosin-specific emulsifier has a model preferably of ONIST APS-350, and the water is preferably deionized water.

In the present invention, a method for preparing the rosin emulsion preferably includes the following steps:
rosin is melted and then mixed with a rosin-specific emulsifier to obtain a water-in-oil system; and
hot water of 88°C to 92°C is added dropwise to the water-in-oil system of 98°C to 102°C to obtain a rosin emulsion.

In the present invention, rosin is melted and then mixed with a rosin-specific emulsifier to obtain a water-in-oil system. The present invention has no special limitation on the temperature for melting the rosin, provided that the rosin can be melted. In an embodiment of the present invention, specifically, the rosin is heated at 120°C for melting. In the present invention, the melted rosin is mixed with the rosin-specific emulsifier preferably under stirring, and the stirring is conducted preferably at 550 r/min to 650 r/min. The present invention has no special limitation on the stirring time, provided that the two materials can be thoroughly mixed to form a water-in-oil system.

In the present invention, after the water-in-oil system is obtained, hot water of 88°C to 92°C is added dropwise to the water-in-oil system of 98°C to 102°C to obtain a rosin emulsion. The present invention has no special limitation on the rate for dropwise adding, and a conventional rate for dropwise adding may be adopted. In an embodiment of the present invention, specifically, the obtained water-in-oil system is cooled to 88°C to 92°C from 120°C; then hot water of 88°C to 92°C is added dropwise; and the resulting system is stirred at a rate of 150 r/min to 200 r/min for 20 min at the above temperature, then naturally cooled to room temperature, and filtered to obtain a rosin emulsion.

In the betaine ionic liquid-modified coating provided by the present invention, rosin, which will exist in the form of emulsion droplets and micelles under the synergistic effect of all components, can evenly distribute in the coating film during the film-forming process of a betaine ionic liquid-modified coating, and can be slowly dissolved in alkaline seawater to form microchannels, which is conducive to the stable release of antifoulants and improves the antifouling performance.

The betaine ionic liquid-modified coating provided by the present invention has an ultra-low VOC content (less than 20 g/L), and is environmentally friendly. The betaine ionic liquid-modified coating can form into a coating film with prominent mechanical properties, stable self-polishing rate, and excellent water immersion-resistance and antifouling performance. The betaine ionic liquid-modified coating provided by the present invention is described as follows.

In the present invention, the components of the betaine ionic liquid-modified coating include 20% to 30% and preferably 22% to 28% of betaine ionic liquid-modified emulsion, in mass percentage.

In the present invention, the components of the betaine ionic liquid-modified coating include 5% to 15% and preferably 7% to 12% of rosin emulsion, in mass percentage.

In the present invention, the components of the betaine ionic liquid-modified coating include 20% to 30% and preferably 22% to 28% of antifoulant, in mass percentage. In the present invention, the antifoulant preferably includes a main antifoulant and an auxiliary antifoulant, and the main antifoulant and the auxiliary antifoulant have a mass ratio preferably of (5-7): 1, and more preferably of 6:1. The main antifoulant is preferably cuprous oxide and/or copper powder, and the auxiliary antifoulant is preferably one or more of copper pyrithione, zinc pyrithione, 4,5-dichloro-2-n-octyl-4-isothiazolin-3-one, diuron and zineb. In the present invention, the antifoulant can be gradually released from the coating film to expel fouling organisms attached to the surface of the coating film, which is beneficial for improving the antifouling period of the coating.

In the present invention, the components of the betaine ionic liquid-modified coating include 3% to 10% and preferably 4% to 8% of pigment/filler, in mass percentage; and the pigment/filler preferably includes one or more of organic bentonite, iron oxide red, zinc oxide, calcium carbonate, barium sulfate, mica powder, quartz powder and talc powder. In the present invention, the pigment/filler can increase the volume of the coating, adjust the glossiness, and facilitate the reduction in cost.

In the present invention, the components of the betaine ionic liquid-modified coating include 1% to 2% and preferably 1.2% to 1.8% of water-based additive, in mass percentage. In the present invention, the water-based additive preferably includes a water-based wetting/dispersing agent, a water-based thickening agent, a water-based leveling agent and a water-based defoamer, and the water-based wetting/dispersing agent, the water-based thickening agent, the water-based leveling agent and the water-based defoamer have a mass ratio preferably of (1.8-2.2):(0.8-1.2):(0.8-1.2):(1.8-2.2), and more preferably of 2:1:1:2. The water-based wetting/dispersing agent is preferably at least one of AC8892, BYK156 and BYK152, the water-based thickening agent is preferably a mixture of DeuRheo WT-105A and hydroxyethyl cellulose (the DeuRheo WT-105A and the hydroxyethyl cellulose have a mass ratio preferably of 20:1), the water-based leveling agent is preferably at least one of WCT2490, BYK375 and DC57, and the water-based defoamer is preferably at least one of DA PRO AP7010, BYK025 and DC65. The present invention uses water-based additives to improve the stability and the coating performance of the coating.

In the present invention, the components of the betaine ionic liquid-modified coating include 0.5% to 1% and preferably 0.6% to 0.9% of film-forming additive, in mass percentage; and the film-forming additive preferably includes ethylene glycol ethyl ether and/or ethylene glycol butyl ether, and more preferably is ethylene glycol ethyl ether or ethylene glycol butyl ether.

In the present invention, the components of the betaine ionic liquid-modified coating include the balance of water, in mass percentage; and the water is preferably deionized water.

The present invention provides a method for preparing the betaine ionic liquid-modified coating according to the above technical solution, and the method includes the following steps:
water, a water-based additive, an antifoulant and a pigment/filler are mixed and then ground to obtain a liquid of ground materials; and
the liquid of ground materials is mixed with a betaine ionic liquid-modified emulsion, a rosin emulsion and a film-forming additive to obtain a betaine ionic liquid-modified coating.

In the present invention, water, a water-based additive, an antifoulant and a pigment/filler are mixed and then ground to obtain a liquid of ground materials. In the present invention, the water, water-based additive, antifoulant and pigment/filler are mixed preferably by mixing the water and water-based additive and then adding the antifoulant and pigment/filler for mixing. The present invention has no special limitation on the mixing manner for all components, provided that the components can be thoroughly mixed. In the present invention, the grinding is conducted preferably by grinding the mixture of components to have a fineness less than 40 µm. The present invention has no special limitation on the specific grinding manner, provided that the fineness can meet requirements.

In the present invention, after the liquid of ground materials is obtained, the liquid of ground materials is mixed with a betaine ionic liquid-modified emulsion, a rosin emulsion and a film-forming additive to obtain a betaine ionic liquid-modified coating. The present invention has no special limitation on the mixing manner for all components, provided that the components can be thoroughly mixed. In the present invention, after the mixing is completed, preferably, the resulting mixture is filtered and then discharged to obtain a betaine ionic liquid-modified coating. The present invention has no special limitation on the filtration, and a filtration manner well known to those skilled in the art may be adopted.

The present invention provides the use of the betaine ionic liquid-modified coating according to the above technical solution or a betaine ionic liquid-modified coating prepared by the preparation method according to the above technical solution as a marine antifouling coating. In the present invention, the marine antifouling coating is preferably a water-based marine antifouling coating for ships. The present invention has no special limitation on the method for using the marine antifouling coating, and a method well known to those skilled in the art may be adopted.

The technical solutions in the present invention will be clearly and completely described below in conjunction with the examples of the present invention. Apparently, the described examples are merely some rather than all of the examples of the present invention. All other examples obtained by a person of ordinary skill in the art based on the examples of the present invention without creative efforts shall fall within the protection scope of the present invention.

### Example 1

### Preparation of a betaine ionic liquid-modified emulsion:

8 g of betaine ionic liquid monomer (specifically 3-[*N*,*N*-dimethyl-[2-(2-methylprop-2-enoyloxy)ethyl]amino]propane-1-sulfonic acid zwitterion), 48 g of triisopropylsilyl methacrylate, 19 g of butyl acrylate, 54 g of MMA, 17 g of IBMA and 2.5 g of acrylic acid were weighed and thoroughly mixed at room temperature (25°C); 3 g of nonionic emulsifier (OP-10), 1.5 g of anionic emulsifier (SDS) and 110 g of deionized water were added; and the resulting mixture was stirred at 600 r/min for 30 min of emulsification to obtain a monomer emulsion. 1.4 g of ammonium persulfate was weighed and dissolved in 20 g of deionized water to obtain an initiator aqueous solution.

0.2 g of sodium bicarbonate, 20 g of deionized water, 75 g of monomer emulsion and 3.2 g of initiator aqueous solution were weighed and mixed; the resulting mixture was stirred at 600 r/min for 0.5 h under room temperature, then heated to 81°C at a rate of 5 °C/min under stirring, and further stirred for 40 min; after weak blue light appeared in the system, the system was further stirred for 0.5 h; the remaining monomer emulsion was added dropwise at 81°C within 1 h, and during this period, the remaining initiator aqueous solution was added in batches; after the adding was completed, the system was kept at the above temperature for 1 h, then heated to 88°C and kept at this temperature for 1 h, and cooled to 55°C; 0.5 g to 1 g of ammonia water with a mass concentration of 25% was added dropwise to adjust the pH to 6 to 8; and the resulting mixture was filtered to obtain a betaine ionic liquid-modified emulsion with a solid content of 48.2 wt%.

### Preparation of a rosin emulsion:

40 g of rosin was heated at 120°C for melting, then 10 g of rosin-specific emulsifier (ONIST APS-350) was added, and the resulting mixture was thoroughly stirred at 600 r/min to form a water-in-oil system; the water-in-oil system was cooled to 100°C, and 50 g of hot deionized water with a temperature of 90°C was added dropwise to convert the system into an oil-in-water system; and the resulting system was further stirred at 180 r/min for 20 min under the above temperature, then naturally cooled to room temperature, and filtered to obtain a rosin emulsion.

### Preparation of a betaine ionic liquid-modified coating:

30 g of deionized water, 0.21 g of thickening agent (including 0.2 g of DeuRheo WT-105Aand 0.01 g of hydroxyethyl cellulose), 0.4 g of water-based wetting/dispersing agent (BYK156), 0.2 g of water-based leveling agent (WCT 2490) and 0.4 g of water-based defoamer (DA PRO AP7010) were mixed and thoroughly stirred in a disperser; 21 g of cuprous oxide, 2 g of diuron, 1.6 g of zineb and 6 g of pigment/filler (including 1 g of iron oxide red, 1 g of zinc oxide, 1 g of barium sulfate, and 3 g of organic bentonite); the resulting mixture was subjected to high-speed dispersion at 800 r/min for 30 min, and then ground to have a fineness less than 40 µm; 26.5 g of betaine ionic liquid-modified emulsion, 11 g of rosin emulsion and 0.7 g of ethylene glycol butyl ether were added; and the resulting mixture was stirred at 200 r/min for 30 min of dispersion, then filtered, and discharged to obtain a betaine ionic liquid-modified coating.

### Example 2

A betaine ionic liquid-modified emulsion and a rosin emulsion were prepared by the same method as in Example 1.

### Preparation of a betaine ionic liquid-modified coating:

30 g of deionized water, 0.21 g of thickening agent (including 0.2 g of DeuRheo WT-105A and 0.01 g of hydroxyethyl cellulose), 0.4 g of water-based wetting/dispersing agent (AC 8892), 0.2 g of water-based leveling agent (DC57) and 0.4 g of water-based defoamer (DA PRO AP7010) were mixed and thoroughly stirred in a disperser; 21 g of cuprous oxide, 4 g of 4,5-dichloro-2-n-octyl-4-isothiazolin-3-one and 6.2 g of pigment/filler (including 1.4 g of talc powder, 1.4 g of zinc oxide, 1.4 g of mica powder, and 2 g of organic bentonite); the resulting mixture was subjected to high-speed dispersion at 800 r/min for 30 min, and then ground to have a fineness less than 40 µm; 26 g of betaine ionic liquid-modified emulsion, 11 g of rosin emulsion and 0.6 g of ethylene glycol butyl ether were added; and the resulting mixture was stirred at 200 r/min for 30 min of dispersion, then filtered, and discharged to obtain a betaine ionic liquid-modified coating.

### Example 3

### Preparation of a betaine ionic liquid-modified emulsion:

9 g of betaine ionic liquid monomer (specifically 3-[*N*,*N*-dimethyl-[2-(2-methylprop-2-enoyloxy)ethyl]amino]propane-1-sulfonic acid zwitterion), 50 g of triisopropylsilyl methacrylate, 16 g of butyl acrylate, 55 g of MMA, 16 g of IBMA and 2.5 g of acrylic acid were weighed and thoroughly mixed at room temperature; 3 g of nonionic emulsifier (OP-10), 1.5 g of anionic emulsifier (SDBS) and 110 g of deionized water were added; and the resulting mixture was stirred at 600 r/min for 30 min of emulsification to obtain a monomer emulsion. 1.4 g of ammonium persulfate was weighed and dissolved in 20 g of deionized water to obtain an initiator aqueous solution.

0.25 g of sodium bicarbonate, 20 g of deionized water, 75 g of monomer emulsion and 3.2 g of initiator aqueous solution were weighed and mixed; the resulting mixture was stirred at 600 r/min for 0.5 h under room temperature, then heated to 81°C at a rate of 5 °C/min under stirring, and further stirred for 40 min; after weak blue light appeared in the system, the system was further stirred for 0.5 h; the remaining monomer emulsion was added dropwise at 81°C within 1 h, and during this period, the remaining initiator aqueous solution was added in batches; after the adding was completed, the system was kept at the above temperature for 1 h, then heated to 88°C and kept at this temperature for 1 h, and cooled to 55°C; 0.5 g to 1 g of ammonia water with a mass concentration of 25% was added dropwise to adjust the pH to 6 to 8; and the resulting mixture was filtered to obtain a betaine ionic liquid-modified emulsion with a solid content of 48 wt%.

A rosin emulsion was prepared by the same method as in Example 1.

### Preparation of a betaine ionic liquid-modified coating:

30 g of deionized water, 0.21 g of thickening agent (including 0.2 g of DeuRheo WT-105A and 0.01 g of hydroxyethyl cellulose), 0.4 g of water-based wetting/dispersing agent (BYK156), 0.2 g of water-based leveling agent (WCT 2490) and 0.4 g of water-based defoamer (DA PRO AP7010) were mixed and thoroughly stirred in a disperser; 20 g of cuprous oxide, 1.5 g of copper pyrithione, 1.5 g of zineb and 5 g of pigment/filler (including 1 g of iron oxide red, 1 g of zinc oxide, 1 g of barium sulfate, and 2 g of organic bentonite); the resulting mixture was subjected to high-speed dispersion at 800 r/min for 30 min, and then ground to have a fineness less than 40 µm; 28 g of betaine ionic liquid-modified emulsion, 12 g of rosin emulsion and 0.8 g of ethylene glycol butyl ether were added; and the resulting mixture was stirred at 200 r/min for 30 min of dispersion, then filtered, and discharged to obtain a betaine ionic liquid-modified coating.

### Example 4

A betaine ionic liquid-modified emulsion was prepared by the same method as in Example 3, and a rosin emulsion was prepared by the same method as in Example 1.

### Preparation of a betaine ionic liquid-modified coating:

33 g of deionized water, 0.21 g of thickening agent (including 0.2 g of DeuRheo WT-105A and 0.01 g of hydroxyethyl cellulose), 0.4 g of water-based wetting/dispersing agent (AC 8892), 0.2 g of water-based leveling agent (DC57) and 0.4 g of water-based defoamer (DA PRO AP7010) were mixed and thoroughly stirred in a disperser; 20 g of cuprous oxide, 3.3 g of 4,5-dichloro-2-n-octyl-4-isothiazolin-3-one and 5 g of pigment/filler (including 1 g of iron oxide red, 1 g of zinc oxide, 1 g of mica powder, and 2 g of organic bentonite); the resulting mixture was subjected to high-speed dispersion at 800 r/min for 30 min, and then ground to have a fineness less than 40 µm; 27 g of betaine ionic liquid-modified emulsion, 10 g of rosin emulsion and 0.5 g of ethylene glycol butyl ether were added; and the resulting mixture was stirred at 200 r/min for 30 min of dispersion, then filtered, and discharged to obtain a betaine ionic liquid-modified coating.

### Evaluation for physical and chemical properties and antifouling performance:

(1) The VOC content was determined for the betaine ionic liquid-modified coatings prepared in Examples 1 to 4 according to a method specified in GB 18582-2008.
(2) The betaine ionic liquid-modified coatings prepared in Examples 1 to 4 were sprayed on the surfaces of substrates to form coating films, and performance tests were conducted for the obtained coating films, specifically as follows:
   The adhesion of the coating film was tested according to a scratch method specified in GB 1720-79;
   the flexibility of the coating film was tested according to a method specified in GB1731-79;
   the impact resistance of the coating film was tested according to a method specified in GB1732-79; and
   the polishing rate of the coating film was tested according to a method specified in GB/T 31411-2015.
(3) The betaine ionic liquid-modified coatings prepared in Examples 1 to 4 were sprayed on low-carbon steel plates (200 × 300 × 2 mm) with epoxy anticorrosive primer to form sample plates, and after fully cured at room temperature for 2 days, the sample plates were placed at a depth of 1 m under seawater for a static real sea exposure test, with a test period of 9 months, and a test site: Nan'ao waters in Shenzhen, China.

The specific test results are shown in Table 1.

Table 1 Data for the physical and chemical properties and antifouling performance of the betaine ionic liquid-modified coatings in Examples 1 to 4

| Source of sample | Adhesion | Flexibility | Impact resistance | VOC content (g/L) | Average polishing rate | After 9 months of static real sea exposure, fouling area on the surface of the sample plate |
|---|---|---|---|---|---|---|
| Example 1 | Level 1 | 1 mm | > 50 kg•cm | 17.0 | 0.33 µm/d | less than 3% |
| Example 2 | Level 1 | 1 mm | > 50 kg•cm | 16.2 | 0.29 µm/d | less than 3% |
| Example 3 | Level 1 | 1 mm | > 50 kg•cm | 19.0 | 0.40 µm/d | less than 5% |
| Example 4 | Level 1 | 1 mm | > 50 kg•cm | 14.0 | 0.35 µm/d | less than 5% |

It can be seen from Table 1 that the betaine ionic liquid-modified coating provided by the present invention has excellent physical and chemical properties, a stable polishing rate, and prominent marine biofouling-resistance.

The above descriptions are merely preferred implementations of the present invention.

## Claims

1. A betaine ionic liquid-modified coating, comprising the following components, in mass percentage:
20% to 30% of betaine ionic liquid-modified emulsion, 5% to 15% of rosin emulsion, 20% to 30% of antifoulant, 3% to 10% of pigment/filler, 1% to 2% of water-based additive, 0.5% to 1% of film-forming additive, and the balance of water;
wherein the betaine ionic liquid-modified emulsion is prepared by the following raw materials, in mass percentage:
2% to 3% of betaine ionic liquid monomer, 15% to 20% of silyl acrylate monomer, 30% to 40% of acrylic ester monomer, 0.5% to 1.5% of acrylic acid, 1% to 2% of emulsifier, 0.3% to 0.6% of initiator, 0.05% to 0.1% of sodium bicarbonate, 0.3% to 0.5% of pH adjuster, and the balance of water.

2. The betaine ionic liquid-modified coating according to claim 1, wherein, the betaine ionic liquid monomer comprises 3-[*N*,*N*-dimethyl-[2-(2-methylprop-2-enoyloxy)ethyl]amino]propane-1-sulfonic acid zwitterion;
the silyl acrylate monomer comprises triisopropylsilyl methacrylate and/or triisopropylsilyl acrylate; and
the acrylic ester monomer comprises one or more of methyl methacrylate (MMA), butyl methacrylate (BMA), butyl acrylate, hydroxyethyl methacrylate (HEMA) and isobornyl methacrylate (IBMA).

3. The betaine ionic liquid-modified coating according to claim 1, wherein, the emulsifier is at least one of an anionic emulsifier, a cationic emulsifier and a nonionic emulsifier;
the initiator is a persulfate initiator; and
the pH adjuster is ammonia water with a mass concentration of 25% to 28%.

4. The betaine ionic liquid-modified coating according to any one of claims 1 to 3, wherein the betaine ionic liquid-modified emulsion is prepared by the following steps:
mixing the betaine ionic liquid monomer, the silyl acrylate monomer, the acrylic ester monomer, the acrylic acid, the emulsifier and a first part of water, and then subjecting the resulting mixture to emulsification to obtain a monomer emulsion;
dissolving the initiator in a second part of water to obtain an initiator aqueous solution;
mixing the sodium bicarbonate, the remaining water, a part of the monomer emulsion and a part of the initiator aqueous solution by stirring, then heating the resulting mixture to 80°C to 81°C, and further stirring the mixture at this temperature for 50 min to 100 min to obtain a seed emulsion; and
adding the remaining monomer emulsion and the remaining initiator aqueous solution dropwise to the seed emulsion, heating the resulting mixture to 87°C to 89°C and holding the temperature 50 min to 70 min, then cooling the mixture to 50°C to 55°C, and adding the pH adjuster to the resulting system to obtain the betaine ionic liquid-modified emulsion.

5. The betaine ionic liquid-modified coating according to claim 4, wherein, the first part of water accounts for 10% to 15% of the total amount of water; the initiator aqueous solution has a mass concentration of 5% to 10%;
the part of the monomer emulsion accounts for 25% to 35% of the total amount of the monomer emulsion; and
the part of the initiator aqueous solution accounts for 12% to 18% of the total amount of the initiator aqueous solution.

6. The betaine ionic liquid-modified coating according to claim 1, wherein the rosin emulsion is prepared by the following raw materials, in parts by mass:
35 to 45 parts of rosin, 8 to 10 parts of rosin-specific emulsifier, and 45 to 55 parts of water.

7. The betaine ionic liquid-modified coating according to claim 1 to 6, wherein the rosin emulsion is prepared by the following steps:
melting the rosin, and then mixing the melted rosin with the rosin-specific emulsifier to obtain a water-in-oil system; and
adding hot water of 88°C to 92°C dropwise to the water-in-oil system of 98°C to 102°C to obtain the rosin emulsion.

8. The betaine ionic liquid-modified coating according to claim 1, wherein, the antifoulant comprises a main antifoulant and an auxiliary antifoulant, wherein the main antifoulant is cuprous oxide and/or copper powder, and the auxiliary antifoulant is one or more of copper pyrithione, zinc pyrithione, 4,5-dichloro-2-*n*-octyl-4-isothiazolin-3-one, diuron and zineb;
the pigment/filler comprises one or more of organic bentonite, iron oxide red, zinc oxide, calcium carbonate, barium sulfate, mica powder, quartz powder and talc powder;
the water-based additive comprises a water-based wetting/dispersing agent, a water-based thickening agent, a water-based leveling agent and a water-based defoamer; and
the film-forming additive comprises ethylene glycol ethyl ether and/or ethylene glycol butyl ether.

9. A method for preparing the betaine ionic liquid-modified coating according to any one of claims 1 to 8, comprising the following steps:
mixing water, a water-based additive, an antifoulant and a pigment/filler, then grinding the resulting mixture to obtain a liquid of ground materials; and
mixing the liquid of ground materials with a betaine ionic liquid-modified emulsion, a rosin emulsion and a film-forming additive to obtain the betaine ionic liquid-modified coating.

10. Use of the betaine ionic liquid-modified coating according to any one of claims 1 to 8 or a betaine ionic liquid-modified coating prepared by the preparation method according to claim 9 as a marine antifouling coating.

## Patentansprüche

1. Mit einem ionischen flüssigen Betain modifizierte Beschichtung, welche die folgenden Komponenten in Massenprozent umfasst:
20 % bis 30 % ionisch flüssig Betain modifizierte Emulsion, 5 % bis 15 % Kolophoniumemulsion, 20 % bis 30 % Antifoulingmittel, 3 % bis 10 % Pigment/Füllstoff, 1 % bis 2 % Additiv auf Wasserbasis, 0,5 % bis 1 % filmbildendes Additiv und als Rest Wasser;
wobei die mit einem ionischen flüssigen Betain modifizierte Emulsion aus den folgenden Rohstoffen in Massenprozent hergestellt wird:
2 % bis 3 % ionische flüssige Betain-Monomer, 15 % bis 20 % Silylacrylat-Monomer, 30 % bis 40 % Acrylester-Monomer, 0,5 % bis 1,5 % Acrylsäure, 1 % bis 2 % Emulgator, 0,3 % bis 0,6 % Initiator, 0,05 % bis 0,1 % Natriumbicarbonat, 0,3 % bis 0,5 % pH-Einsteller, als Rest Wasser.

2. Mit einem ionischen flüssigen Betain modifizierte Beschichtung nach Anspruch 1, wobei das ionische flüssige Betain-Monomer ein 3-[*N*,*N*-Dimethyl-[2-(2-methylprop-2-enoyloxy)ethyl]amino]propan-l-sulfonsäure-Zwitterion umfasst;
das Silylacrylat-Monomer umfasst Triisopropylsilylmethacrylat und/oder Triisopropylsilylacrylat; und
das Acrylester-Monomer eines oder mehrere der folgenden umfasst: Methylmethacrylat (MMA), Butylmethacrylat (BMA), Butylacrylat, Hydroxyethylmethacrylat (HEMA) und Isobornylmethacrylat (IBMA).

3. Mit einem ionischen flüssigen Betain modifizierte Beschichtung nach Anspruch 1, wobei der Emulgator mindestens einer von einem anionischen Emulgator, einem kationischen Emulgator und einem nichtionischen Emulgator ist;
der Initiator ein Persulfat-Initiator ist; und
das pH-Einstellmittel Ammoniakwasser mit einer Massenkonzentration von 25 % bis 28 % ist.

4. Mit einem ionischen flüssigen Betain modifizierte Beschichtung nach einem der Ansprüche 1 bis 3, wobei die mit einem ionischen flüssigen Betain modifizierte Emulsion durch die folgenden Schritte hergestellt wird:
Mischen des ionischen flüssigen Betain-Monomers, des Silylacrylat-Monomers, des Acrylester-Monomers, der Acrylsäure, des Emulgators und eines ersten Teils Wasser und anschließendes Emulgieren der resultierenden Mischung, um eine Monomeremulsion zu erhalten;
Auflösen des Initiators in einem zweiten Teil Wasser, um eine wässrige Lösung des Initiators zu erhalten;
Mischen des Natriumbicarbonats, des restlichen Wassers, eines Teils der Monomerenemulsion und eines Teils der wässrigen Initiatorlösung durch Rühren, anschließendes Erhitzen der resultierenden Mischung auf 80 °C bis 81 °C und weiteres Rühren der Mischung bei dieser Temperatur für 50 min bis 100 min, um eine Keimemulsion zu erhalten; und
tropfenweise Zugabe der verbleibenden Monomeremulsion und der verbleibenden wässrigen Initiatorlösung zu der Keimemulsion, Erhitzen des resultierenden Gemisches auf 87 °C bis 89 °C und Halten der Temperatur für 50 min bis 70 min, anschließendes Abkühlen des Gemisches auf 50 °C bis 55 °C und Zugabe des pH-Einstellmittels zu dem resultierenden System, um die mit einem ionischen flüssigen Betain modifizierte Emulsion zu erhalten.

5. Mit einem ionischen flüssigen Betain modifizierte Beschichtung nach Anspruch 4, wobei der erste Teil des Wassers 10 bis 15 % der Gesamtwassermenge ausmacht; die wässrige Initiatorlösung eine Massenkonzentration von 5 bis 10 % aufweist;
der Anteil der Monomeremulsion 25 % bis 35 % der Gesamtmenge der Monomeremulsion ausmacht; und
der Anteil der wässrigen Initiatorlösung 12 % bis 18 % der Gesamtmenge der wässrigen Initiatorlösung ausmacht.

6. Mit einem ionischen flüssigen Betain modifizierte Beschichtung nach Anspruch 1, wobei die Kolophoniumemulsion aus den folgenden Rohstoffen, in Masseteilen, hergestellt wird:
35 bis 45 Teile Kolophonium, 8 bis 10 Teile kolophoniumspezifischer Emulgator und 45 bis 55 Teile Wasser.

7. Mit einem ionischen flüssigen Betain modifizierte Beschichtung nach einem der Ansprüche 1 bis 6, wobei die Kolophoniumemulsion durch die folgenden Schritte hergestellt wird:
Schmelzen des Kolophoniums und anschließendes Mischen des geschmolzenen Kolophoniums mit dem kolophoniumspezifischen Emulgator, um ein Wasser-in-Öl-System zu erhalten; und
tropfenweise Zugabe von 88 °C bis 92 °C heißem Wasser zu dem 98 °C bis 102 °C heißen Wasser-in-Öl-System, um die Kolophoniumemulsion zu erhalten.

8. Mit einem ionischen flüssigen Betain modifizierte Beschichtung nach Anspruch 1, wobei das Antifoulingmittel ein Hauptantifoulingmittel und ein Hilfsantifoulingmittel umfasst, wobei das Hauptantifoulingmittel Kupfer(II)oxid und/oder Kupferpulver ist und das Hilfsantifoulingmittel eines oder mehrere von Kupferpyrithion, Zinkpyrithion, 4,5-Dichloro-2-n-octyl-4-isothiazolin-3-on, Diuron und Zineb ist;
das Pigment/Füllstoff ein oder mehrere organische Bentonite, Eisenoxidrot, Zinkoxid, Calciumcarbonat, Bariumsulfat, Glimmerpulver, Quarzpulver und Talkpulver umfasst;
das Additiv auf Wasserbasis ein Benetzungs-/Dispergiermittel auf Wasserbasis, ein Verdickungsmittel auf Wasserbasis, ein Egalisierungsmittel auf Wasserbasis und einen Entschäumer auf Wasserbasis umfasst; und
der filmbildende Zusatzstoff Ethylenglykolethylether und/oder Ethylenglykolbutylether umfasst.

9. Verfahren zur Herstellung der mit einem ionischen flüssigen Betain modifizierte Beschichtung nach einem der Ansprüche 1 bis 8, umfassend die folgenden Schritte:
Mischen von Wasser, einem Additiv auf Wasserbasis, einem Antifoulingmittel und einem Pigment/Füllstoff, anschließendes Mahlen der resultierenden Mischung, um eine Flüssigkeit aus gemahlenen Materialien zu erhalten; und
Mischen der Flüssigkeit aus gemahlenen Materialien mit einer mit einem ionischen flüssigen Betain modifizierten Emulsion, einer Kolophoniumemulsion und einem filmbildenden Additiv, um die mit einem ionischen flüssigen Betain modifizierte Beschichtung zu erhalten.

10. Verwendung der mit einem ionischen flüssigen Betain modifizierten Beschichtung nach einem der Ansprüche 1 bis 8 oder einer mit einem ionischen flüssigen Betain modifizierten Beschichtung, die nach dem Herstellungsverfahren gemäß Anspruch 9 hergestellt wurde, als Antifouling-Beschichtung für Schiffe.

## Revendications

1. Revêtement modifié par un liquide ionique de bétaïne, comprenant les composants suivants, en pourcentage de masse :
20 % à 30 % d'émulsion modifiée par un liquide ionique de bétaïne, 5 % à 15 % d'émulsion de colophane, 20 % à 30 % d'agent antisalissure, 3 % à 10 % de pigment/charge, 1 % à 2 % d'additif à base d'eau, 0,5 % à 1 % d'additif filmogène, et le reste d'eau ;
dans laquelle l'émulsion modifiée par le liquide ionique de bétaïne est préparée par les matières premières suivantes, en pourcentage massique :
2 % à 3 % de monomère liquide ionique de bétaïne, 15 % à 20 % de monomère d'acrylate de silyle, 30 % à 40 % de monomère d'ester acrylique, 0,5 % à 1,5 % d'acide acrylique, 1 % à 2 % d'émulsifiant, 0,3 % à 0,6 % d'initiateur, 0,05 % à 0,1 % de bicarbonate de sodium, 0,3 % à 0,5 % d'ajusteur de pH, et le reste d'eau.

2. Revêtement modifié par un liquide ionique de bétaïne selon la revendication 1, dans lequel, le monomère liquide ionique de bétaïne comprend le zwitterion de l'acide 3-[*N*,*N*-diméthyl-[2-(2-méthylprop-2-énoyloxy)éthyl]amino]propane-1-sulfonique ;
le monomère d'acrylate de silyle comprend le méthacrylate de triisopropylsilyle et/ou l'acrylate de triisopropylsilyle ; et
le monomère ester acrylique comprend un ou plusieurs des éléments suivants : méthacrylate de méthyle (MMA), méthacrylate de butyle (BMA), acrylate de butyle, méthacrylate d'hydroxyéthyle (HEMA) et méthacrylate d'isobornyle (IBMA).

3. Revêtement modifié par un liquide ionique de bétaïne selon la revendication 1, dans lequel, l'émulsifiant est au moins un parmi un émulsifiant anionique, un émulsifiant cationique et un émulsifiant non ionique ;
l'initiateur est un initiateur de persulfate ; et
l'ajusteur de pH est de l'eau ammoniacale avec une concentration massique de 25% à 28%.

4. Revêtement modifié par un liquide ionique de bétaïne selon l'une quelconque des revendications 1 à 3, dans lequel l'émulsion modifiée par un liquide ionique de bétaïne est préparée par les étapes suivantes :
mélanger le monomère liquide ionique de bétaïne, le monomère d'acrylate de silyle, le monomère d'ester acrylique, l'acide acrylique, l'émulsifiant et une première partie d'eau, puis soumettre le mélange résultant à une émulsification pour obtenir une émulsion de monomères ;
dissoudre l'initiateur dans une deuxième partie d'eau pour obtenir une solution aqueuse d'initiateur ;
mélanger le bicarbonate de sodium, l'eau restante, une partie de l'émulsion de monomères et une partie de la solution aqueuse d'initiateur en agitant, puis chauffer le mélange résultant à 80 °C à 81 °C, et continuer à agiter le mélange à cette température pendant 50 min à 100 min pour obtenir une émulsion d'ensemencement ; et
ajouter goutte à goutte l'émulsion de monomère restante et la solution aqueuse d'initiateur restante à l'émulsion d'ensemencement, chauffer le mélange résultant à 87 °C à 89 °C et maintenir la température pendant 50 min à 70 min, puis refroidir le mélange à 50 °C à 55 °C, et ajouter l'ajusteur de pH au système résultant pour obtenir l'émulsion modifiée par le liquide ionique de bétaïne.

5. Revêtement modifié par un liquide ionique de bétaïne selon la revendication 4, dans lequel, la première partie de l'eau représente 10 % à 15 % de la quantité totale d'eau ; la solution aqueuse d'initiateur a une concentration massique de 5 % à 10 % ;
la partie de l'émulsion de monomère représente 25 % à 35 % de la quantité totale de l'émulsion de monomère ; et
la partie de la solution aqueuse d'initiateur représente 12 % à 18 % de la quantité totale de la solution aqueuse d'initiateur.

6. Revêtement modifié par un liquide ionique de bétaïne selon la revendication 1, dans lequel l'émulsion de colophane est préparée par les matières premières suivantes, en parties en masse :
35 à 45 parties de colophane, 8 à 10 parties d'émulsifiant spécifique à la colophane, et 45 à 55 parties d'eau.

7. Revêtement modifié par un liquide ionique de type bétaïne selon la revendication 1 à 6, dans lequel l'émulsion de colophane est préparée par les étapes suivantes :
faire fondre la colophane, puis mélanger la colophane fondue avec l'émulsifiant spécifique à la colophane pour obtenir un système eau-dans-huile ; et
ajouter goutte à goutte de l'eau chaude de 88 °C à 92 °C au système eau-dans-huile de 98 °C à 102 °C pour obtenir l'émulsion de colophane.

8. Revêtement modifié par un liquide ionique de bétaïne selon la revendication 1, dans lequel l'agent antisalissure comprend un agent antisalissure principal et un agent antisalissure auxiliaire, dans lequel l'agent antisalissure principal est de l'oxyde cuivreux et/ou de la poudre de cuivre, et l'agent antisalissure auxiliaire est un ou plusieurs des éléments suivants : pyrithione de cuivre, pyrithione de zinc, 4,5-dichloro-2-n-octyl-4-isothiazolin-3-one, diuron et zinèbe ;
le pigment/charge comprend un ou plusieurs des éléments suivants : bentonite organique, oxyde de fer rouge, oxyde de zinc, carbonate de calcium, sulfate de baryum, poudre de mica, poudre de quartz et poudre de talc ;
l'additif à base d'eau comprend un agent mouillant/dispersant à base d'eau, un agent épaississant à base d'eau, un agent d'égalisation à base d'eau et un agent antimousse à base d'eau ; et
l'additif filmogène comprend l'éther éthylique d'éthylène glycol et/ou l'éther butylique d'éthylène glycol.

9. Procédé de préparation du revêtement modifié par un liquide ionique de bétaïne selon l'une quelconque des revendications 1 à 8, comprenant les étapes suivantes
mélanger de l'eau, un additif à base d'eau, un agent antisalissure et un pigment/charge, puis broyer le mélange résultant pour obtenir un liquide de matières broyées ; et
mélanger le liquide de matériaux broyés avec une émulsion modifiée par un liquide ionique de bétaïne, une émulsion de colophane et un additif filmogène pour obtenir le revêtement modifié par un liquide ionique de bétaïne.

10. Utilisation du revêtement modifié par un liquide ionique de bétaïne selon l'une quelconque des revendications 1 à 8 ou d'un revêtement modifié par un liquide ionique de bétaïne préparé par le procédé de préparation selon la revendication 9 comme revêtement antisalissure marin.
